Europäisches Patentamt

European Patent Office

Office européen des brevets

(19)

(11) Numéro de publication: **0 374 308**

**A1**

## (12) DEMANDE DE BREVET EUROPEEN

(21) Numéro de dépôt: **88203046.3**

(22) Date de dépôt: **07.12.88**

(51) Int. Cl.5: **F23G 5/24, F23G 5/14, F23G 7/00**

(43) Date de publication de la demande:
**27.06.90 Bulletin 90/26**

(84) Etats contractants désignés:
**AT BE CH DE ES FR GB GR IT LI LU NL SE**

(71) Demandeur: **Daigle, Ghislain**
**4490 de la Promenade**
**Saint-Antoine de Tilly P. Québec G0S**
**2C0(CA)**

(72) Inventeur: **Daigle, Ghislain**
**4490 de la Promenade**
**Saint-Antoine de Tilly P. Québec G0S**
**2C0(CA)**

(74) Mandataire: **De Palmenaer, Roger et al**
**Bureau Vander Haeghen 63, avenue de la**
**Toison d'Or**
**B-1060 Bruxelles(BE)**

(54) **Procédé d'incinération et de recyclage des déchets et des déchets dangereux (toxiques).**

(57) Procédé selon lequel les déchets liquides sont brûlés en présence d'oxygène dans une première zone (1). Des carburants ou des autres déchets d'un certain pouvoir calorifique, des métaux et du calcaire peuvent être chargés dans une deuxième zone (2). Les gaz résiduels sont incinérés et traités dans une (3) ou plusieurs zones ultérieures.

Description physique de l'invention PCT/EA 8 8 / 0 1 1 1 7 .

- VUE EN COUPE -

EP 0 374 308 A1

## Procédé d'incinération et de recyclage des déchets et des déchets dangereux (toxiques).

La présente invention concerne un nouveau procédé adapté par une modification d'une ancienne technologie qui permet de détruire dans des conditions de hautes temperatures les déchets dangereux ou toxiques tel que les huiles contaminées par des Biphényles Polychlorés (BPC) ou des Askarels et bien d'autres déchets du même type.

Cette invention est reliée à la modification ou l'adaptation d'un ancien haut fourneau communément appelé Cubilot ou Cupola (voir schéma en annexe) permet de recycler les métaux contaminés par les déchets dangereux et les déchets métalliques.

Cette invention utilise comme carburant de base du coke ou du coke métallurgique. Il permet aussi l'utilisation de carburant de remplacement et qui sont des déchets. Par éxemple les pneus usagés ou tout autres déchets calorifiques.

Cette innovation peut être utilisée dans une installation fixe (usine fixe) ou sur des remorques pouvant être déplacées (usine mobile).

A la base du cubilot. il faut intaller et adapter une zone de combustion supplémentaire qui fonctionne par une ou des injections d'oxygène pure (95% à 100%) avec les liquides contaminés.

La quantité d'injecteur sera fonction de la dimension du fourneau modifie ou construit, du type de carburants utilisés et des temps de résidences nécessaires à la destruction complète des déchets dangereux.

La quantité de liquide contaminé qui sera détruite dans la nouvelle zone sera déterminée par la dimension physique de de la zone d'injection (zone #1) longeur et diamètre, dutype de déchet, du temps de résidence disponible ou nécessaire a sa destruction et du type de système d'injection qui sera utilisé (soit: à pression, avec assistance d'un gaz, rotatif ou par vibration (ondes)).

La quantité d'oxygène pure (95% à 100%) nécessaire pour opérer cette nouvelle zone (invention) sera fonction des dimensions physiques de la zone, du type de déchets liquides, du type de carburants utilisés ( coke, coke métallurgique, vieux pneus, charbon, etc...) ,de la quantité utilisée, de la quantité de pierre de chaux utilisée et de la quantité de métal présent.

La seconde zone de combustion de l'invention sera alimentée d'air ou d'air enrichi d'oxygène.

Les matériaux seront chargés en couche selon les indications du schéma en annexe. On y retrouve une couche de carburant dont les proportions seront définies par la quantité de métaux devant être fondus ou recyclés, les temps de résidence dans les deux premières zones, le type et la quantité de carburant utilisé, le type et la dimension des métaux qui seront fondus et les températures d'opération dans les deux premières zones.

La pierre de chaux qui sera utilisée varira dans ses dimensions et dans sa composition ou concentration d'atomes de calcium (Ca) present. Tout autre produit contenant du calcium en proportion suffisante pourra être utilisé. La quantité de pierre de chaux sera fonction du temps de résidence des deux premières zones, de la quantité et du type de carburant utilisé, de la quantité et du type de métal qui sera recyclé et de la quantité et du type de produits liquides dangereux qui sera injecté avec l'oxygène dans la première zone. Cette pierre de chaux sera regroupée en couche et melangée partiellement au métaux.

La forme de cette invention(haut fourneau) sera de forme tubulaire et sera composé d'un mur d'acier sur lequel repose un mur intérieur en refractaire ou un mur d'acier refroidit à l'extérieur par une couche de liquide (eau). L'épaisseur du mur ou du mur avec réfractaire sera fonction des températures internes, de la charge physique qu'il devra supporter et de la quantité et du type de gaz en contact avec le refractaire ou le mur d'acier.

A la base du fourneau, on retrouve des orifices et des séparateurs de métaux que l'on utilise couramment dans un cubilot éxistant et qui sépare la lave des metaux recyclés.

La position de l'invention est verticale permettant à la charge de descendre par gravité.

La troisième zone d'incineration fonctionne avec l'aide d'un ou des brûleurs opérant soit au gaz naturel, au propane ou avec un carburant liquide. Ils peuvent se situer avant ou après la porte de chargement.

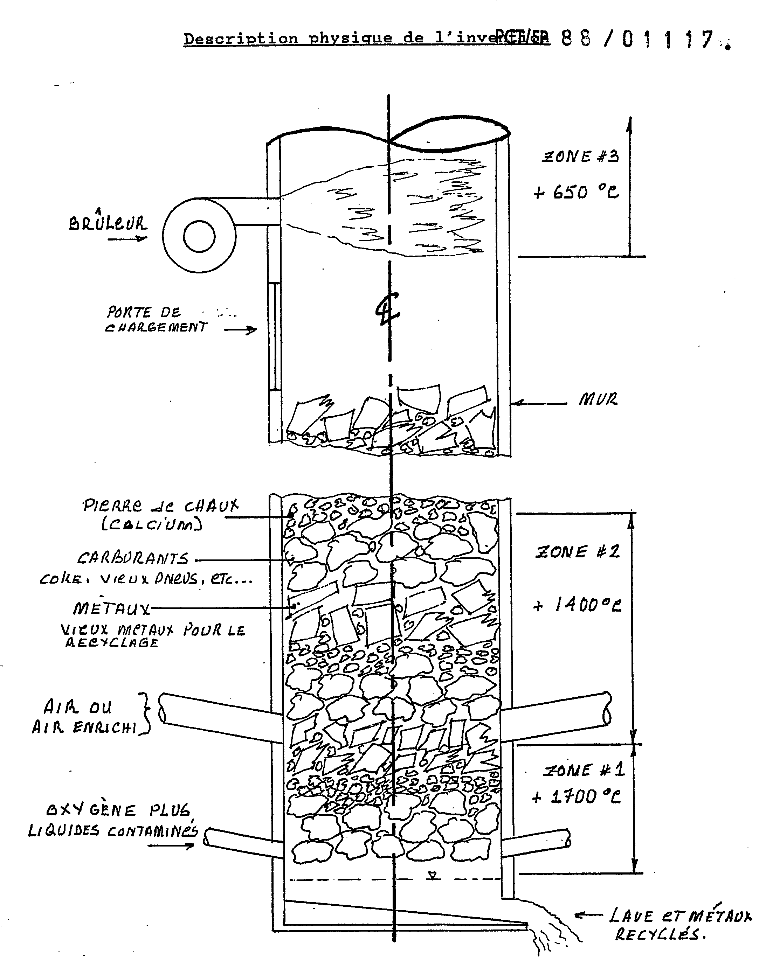

## Revendications

1)Procédé pour détruire et recycler les déchets industriels, municipaux et des déchets contaminés ou dangereux pour la santé publique et l'environnement.

2)Ce procédé revendique tout système de forme similaire et adapté pour détruire ou recycler les déchets avec une première zone d'incineration alimentées de liquides contaminés de produits toxiques ou non, combiné avec de l'oxygène pure de 95% à 100%.

3)Ce procédé revendique l'utilisation de pneu usagé ou tous les autres déchets calorifiques pouvant remplacer totalement ou partiellement le coke, le coke metallurgique ou le charbon pendant son opération.

4)Ce procédé revendique toutes les conditions d'opérations et les dimensions physiques attribuées pour diverses capacités d'opérations allant de 0,01 tonnes/métrique par heure à 1000 tonnes métriques par heure de métaux traités ou recyclés.

5)Ce procédé revendique toutes compositions physiques nécessaire à la protection des murs d'acier ou de tout autres alliages ( mur avec réfractaire ou mur refroidit par une gaine d'eau ou un écoulement d'eau).

6)Ce procédé revendique l'utilisation de trois zones et plus de combustion.

7)Ce procédé revendique l'utilisation de un ou plusieurs incinérateurs après ou avant la porte de chargement pour l'incinération des gaz residuels aux recyclages et aux traitement des déchets.

8)Ce procédé revendique la possibilité d'être une installation fixe ou mobile.

9)Ce procédé revendique l'utilisation d'oxygène se situant entre 95% et 100% de pureté lors de l'injection des déchets liquides et solides contaminés toxiques ou dangereux dans la première zone de combustion(toxiques pour la santé publique et l'environnement)

10)Ce procédé revendique l'utilisation de pierre de chaux (calcaire) ou tout autres produits contenant du calcium (Ca) et pouvant remplacer la pierre de chaux servant à la fixation ou l'absorbtion d'atomes ou de molécules toxiques lors de l'opération de ce nouveau procédé.

11) Ce procédé revendique la méthode de mélange par couche successive ou mélangé, des métaux, de la pierre de chaux et des carburants solides.

107·12·88

PCT/FR 88 / 0 1 1 1 7

Description physique de l'invention

ZONE #3
+ 650 °C

BRÛLEUR

PORTE DE
CHARGEMENT

MUR

PIERRE DE CHAUX
(CALCIUM)

CARBURANTS
COKE, VIEUX PNEUS, ETC...

MÉTAUX
VIEUX MÉTAUX POUR LE
RECYCLAGE

ZONE #2
+ 1400°C

AIR OU
AIR ENRICHI

ZONE #1
+ 1700°C

OXYGÈNE PLUS
LIQUIDES CONTAMINÉS

LAVE ET MÉTAUX
RECYCLÉS.

- VUE EN COUPE -

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 113 815 (S.K.F. STEEL ENGINEERING A.B.)<br>* Page 1, lignes 40-57,95-127; page 2, lignes 24-30,88-92,103-121; page 3, lignes 13-21,121-128; figure * | 1,2,5,9,10 | F 23 G 5/24<br>F 23 G 5/14<br>F 23 G 7/00 |
| X | WO-A-8 301 460 (REESE)<br>* Page 12, lignes 1-11 * | 1,2,9,10 | |
| X | US-A-4 175 949 (BREZNAY)<br>* Colonne 2, lignes 38-59 * | 1,3 | |
| X | US-A-4 462 318 (CARBEAU)<br>* Colonne 1, lignes 7-13,56-62; colonne 2, lignes 7-64; figures 1-3,8 * | 1,5,8 | |
| X | US-A-3 808 619 (VANDERVEER)<br>* Colonne 5, lignes 9-14,41-60; colonne 6, lignes 39-44; colonne 7, lignes 14-22; figure 1 * | 1,5,6 | |
| X | US-A-4 598 650 (SCHNECKENBERGER)<br>* Colonne 2, lignes 53-57,60-67; figure 1 * | 1,6 | DOMAINES TECHNIQUES RECHERCHES (Int. Cl.5)<br><br>F 23 G |
| X | US-A-4 078 914 (GOLD)<br>* Colonne 5, ligne 19 - colonne 6, ligne 13; figure * | 1,11 | |

Le présent rapport a été établi pour toutes les revendications

| Lieu de la recherche | Date d'achèvement de la recherche | Examinateur |
|---|---|---|
| LA HAYE | 04-08-1989 | PHOA Y.E. |

EPO FORM 1503 03.82 (P0402)